Europäisches Patentamt

European Patent Office

Office européen des brevets

(19)

(11) Numéro de publication: **0 178 217**
**B1**

(12) **FASCICULE DE BREVET EUROPEEN**

(45) Date de publication du fascicule du brevet: **18.07.90**

(51) Int. Cl.⁵: **H 05 B 6/80,** B 29 C 35/08

(21) Numéro de dépôt: **85401896.7**

(22) Date de dépôt: **27.09.85**

(54) **Procédé de chauffage dans la masse d'une substance, par exemple en vue d'une vulcanisation ou d'une polymérisation.**

(30) Priorité: **02.10.84 FR 8415106**

(43) Date de publication de la demande:
**16.04.86 Bulletin 86/16**

(45) Mention de la délivrance du brevet:
**18.07.90 Bulletin 90/29**

(84) Etats contractants désignés:
**CH DE GB IT LI**

(56) Documents cités:
**DE-C- 892 040**
**FR-A-1 565 075**
**GB-A- 653 794**
**GB-A-1 163 247**
**US-A-2 595 502**
**US-A-3 851 131**

(73) Titulaire: **VALEO**
**64 Avenue de la Grande Armée**
**F-75017 Paris (FR)**

(72) Inventeur: **Lespinats, Christian**
**30 Rue Basfroi**
**F-75011 - Paris (FR)**
Inventeur: **Minet, Michel**
**53 Rue Villebois Mareuil**
**F-95460 - Ezanville (FR)**

(74) Mandataire: **CABINET BONNET-THIRION**
**95 Boulevard Beaumarchais**
**F-75003 Paris (FR)**

Courier Press, Leamington Spa, England.

**Description**

La présente invention a trait à un procédé de chauffage dans la masse d'une forme réalisée en une substance thermodurcissable au moyen d'un rayonnement électromagnétique, afin d'en effectuer la polymérisation.

On connaît des procédés de chauffage mettant en oeuvre une cavité soumise à un rayonnement électromagnétique dans laquelle on place la substance ou l'objet destiné à être chauffé. Ce genre de procédé met en oeuvre un dispositif, couramment appelé "four à micro-ondes" qui peut être utilisé dans des procédés industriels du vulcanisation ou de polymérisation par élévation de température de certaines substances.

Le champ électromagnétique alternatif, à une fréquence très élevée (2,45 GHz selon la réglementation française, par exemple), provoque des pertes diélectriques, qui chauffent la masse et on atteint ainsi le résultat recherché.

Cependant, et du fait des réflexions multiples des ondes sur les parois de four, il est difficile de contrôler la répartition spatiale de l'énergie transmise à la substance.

On déconseille, pour cette raison, de placer à l'intérieur du four une quelconque pièce de matériau conducteur, métallique notamment, qui perturberait la direction du champ électromagnétique tout en faisant office d'écran réflecteur.

L'absence de contrôle sur l'orientation du champ électromagnétique résulte dans des irrégularités de ce champ causant des inégalités d'échauffement à l'intérieur de la substance, certaines zones étant plus chauffées que d'autres. Or, on sait que l'élévation de température d'une substance augmente généralement son facteur de pertes.

Le facteur de perte conditionne, par son accroissement, l'élévation de température. Rapidement, celle-ci étant directement liée aux pertes, le processus devient localement instable, et les régions de la substance qui étaient le siège des plus fortes élévations thermiques absorbent la plupart de l'énergie électromagnétique.

Outre le fait que les autres régions n'ont pas été suffisamment chauffées, les régions où se sont produites ces instabilités, véritables "emballements" thermiques, ont été surchauffées et donc souvent brûlées.

L'importance des conséquences décrites varie bien entendu selon la nature de l'opération à effectuer, et il est évident qu'elle devient critique dans les opérations de vulcanisation ou de polymérisation d'une matière synthétique qui se décompose à des températures relativement basses.

L'invention vise à remédier aux inconvénients dus à l'absence de contrôle de la direction du champ électromagnétique auquel est soumise la substance destinée à être chauffée, et ce au moyen d'un guidage approprié du champ.

De cette manière, on peut contrôler la distribution de l'énergie dans la substance, et provoquer une élévation de température homogène de cette substance.

Plus précisément, l'invention a pour objet un procédé de chauffage dans la masse d'une substance essentiellement non électriquement conductrice où l'on dispose la substance à l'intérieur d'une cavité (11) fermée à parois électriquement conductrices dans laquelle on injecte, avec une puissance et pendant un temps déterminé, un rayonnement électromagnétique dans la gamme décimétrique qui y crée un champ avec une composante directe et une composante réfléchie caractérisé en ce que l'on répartit la substance à chauffer en couche (16) entre deux plaques (17) d'un métal électriquement bon conducteur, ces deux plaques (17) épousant respectivement chacune des deux plus grandes surfaces de la couche (16) de substance, et en ce que l'on dispose la couche (16) de substance à une distance d'écartement des parois de la cavité (11) au moins égale à un minimum déterminé, où la composante réfléchie devient dominante.

De même, il est possible de répartir la substance à chauffer en panneaux étendus généralement suivant un plan et présentant une épaisseur déterminée, on constitue un empilement de ces panneaux avec interposition de plaques en un métal électriquement bon conducteur qui épousent la forme desdits panneaux, deux plaques étant en outre disposées respectivement au sommet et à la base de l'empilement, et l'on dispose ledit empilement à une distance d'écartement minimum déterminée des parois de ladite cavité.

Ainsi, il est possible de fournir un champ électromagnétique homogène à la substance indépendamment de la position de celle-ci dans la cavité, les plaques métalliques donnant une orientation définie, normale à leur plan aux ondes qui constituent le champ. La pluralité des panneaux empilés alternativement avec des plaques métalliques ici en forme de profilés adjacents, que l'on dénommera "profilés de formage", permet de disposer d'une répartition d'énergie avantageusement constante dans tous les panneaux.

Cependant, en dépit du guidage de l'orientation du champ électromagnétique, il s'établit des ondes stationnaires dans tout panneau de substance de dimensions finies. Ces ondes stationnaires peuvent créer des variations de distribution d'intensité de champ dans la substance, même si le rayonnement auquel celle-ci est initialement soumise est homogène. Les ondes stationnaires s'établissent selon les trois axes.

Dans le sens de l'épaisseur, et selon l'invention, on évite l'inconvénient en limitant cette épaisseur à moins d'une demi-longueur d'onde, les ondes stationnaires ne pouvant s'établir dans ce cas.

Selon les deux autres axes, les ondes stationnaires provoquent des variations d'échauffement selon leur distribution spatiale. Afin de remédier à cet inconvénient, les profilés de formage sont réalisés en un métal praticulièrement bon conducteur thermiquement. Les profilés de formage étant selon l'invention placés en contact intime avec la substance ils servent de pont thermique entre les différentes zones plus ou moins échauffées, et ont ainsi un effet régulateur qui harmonise l'échauffement dans sa répartition spatiale. Il est évident que, afin d'obtenir cette répartition homogène, le contact, et donc le point thermique, ne s'établissent que selon deux axes, il est indispensable d'avoir préalablement évité l'établissement d'ondes stationnaires selon au moins l'un des trois axes.

On réalise donc selon l'invention, un guidage du champ électromagnétique à l'intérieur des panneaux qui y sont soumis, et une régulation thermique complémentaire permettant une homogénéité de l'échauffement en tous points dans l'épaisseur desdits panneaux.

Diverses formes peuvent être réalisées, bien entendu, dans le cadre de l'invention.

Les caractéristiques et avantages de la présente invention ressortiront d'ailleurs de la description qui va suivre, à titre d'exemple, en référence aux dessins annexés sur lesquels:

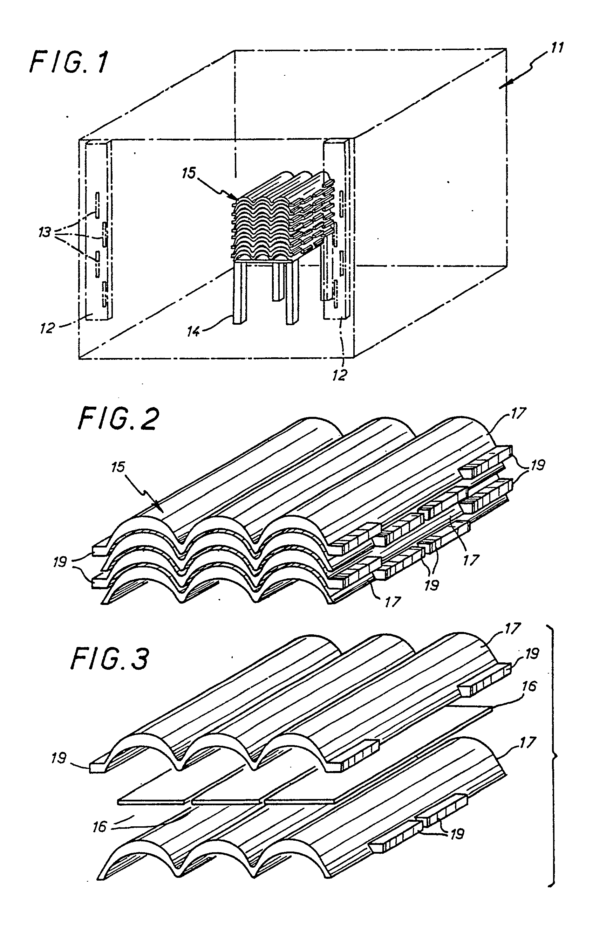

la figure 1 est une représentation schématique en perspective, d'un exemple de mode de chauffage par champ électromagnétique d'un empilement mettant en oeuvre un mode de réalisation d'un procédé selon l'invention;

la figure 2 est une représentation en perspective d'un mode de réalisation d'un empilement selon l'invention;

la figure 3 est une illustration d'une première étape d'un mode de réalisation selon l'invention.

Suivant le mode de réalisation choisi et représenté on décrit on procédé adapté à la fabrication d'une multiplicité d'éléments en forme de tuiles, notamment par polymérisation d'une substance thermodurcissable, que l'on chauffe dans la masse par rayonnement électromagnétique en la plaçant à l'intérieur d'un four dit "à micron-ondes".

Le four à "micro-ondes" utilisé est du genre comportant une cavité 11 déterminée par des parois conductrices, la cavité étant hermétique à la chaleur et aux rayonnements électromagnétiques. Deux guides d'onde tubulaires 12 comportant des antennes rayonnantes 13, ici des fentes, disposées et dimensionnées selon une technique en soi connue, servent à transmettre un rayonnement électromagnétique de fréquence déterminée (2,45 GHz) à la cavité. L'énergie électromagnétique est fournie aux guides d'onde 12 par un générateur approprié, non représenté. Le type de four à "micro-ondes" utilisé pour mettre en oeuvre le procédé selon l'invention ne fait pas partie de l'invention elle-même.

La substance présente avant polymérisation une consistance déjà suffisamment ferme pour se maintenir elle-même, c'est-à-dire ne pas se déformer dans application d'une force extérieure importante.

Pour mettre en oeuvre le procédé selon l'invention, on procède de la manière suivante:

On réalise une succession de panneaux rectangulaires plats 16 de substance d'une épaisseur déterminée, inférieure à une demi-longueur d'onde, la longueur d'onde étant définie par la fréquence du rayonnement utilisé (ici 2,45 GHz) et par le milieu dans lequel elle se propage, ici la substance à polymériser.

La succession des panneaux 16 est disposée selon plusieurs plans superposés, à raison de trois panneaux dans un même plan, avant mise en forme. Chaque panneau est destiné, après mise en forme, à constituer un secteur tubulaire pouvant être découpé ensuite si besoin est, après traitement.

Chaque plan de trois panneaux adjacents successifs est séparé du plan supérieur et du plan inférieur, identique, par une pièce métallique rigide 17 ayant la forme de trois secteurs tubulaires suivant une génératrice, accolés entre eux, similaires à celle des "tuiles romaines". Ces pièces métalliques 17 appelées "profilés de formage" sont électriquement et thermiquement conductrices, avantageusement en alliage d'aluminium. Elles sont identiques entre elles, excepté la position de saillies 19 ménagées pour en permettre la manipulation. Les profilés ont dans l'exemple une épaisseur variable, ce qui ne gêne en aucun cas la mise en oeuvre du procédé suivant l'invention. Chaque secteur tubulaire d'un profilé de formage 17 présente deux surfaces, l'une supérieure, l'autre inférieure dont les rayons sont légèrement différents, afin de donner deux rayons différents aux panneaux de substance 16, permettant ainsi d'obtenir des éléments ayant la forme d'un secteur tubulaire. Ces rayons sont centrés sur deux axes différents, décalés normalement aux plans définis ci-dessus afin de compenser l'épaisseur moyenne d'un profilé de formage 17. On réalise ainsi un empilement 15 de couches de substance 16 et de profilés de formage 17 alternés, les surfaces supérieure et inférieure de l'empilement 15 étant également constituées de profilés de formage 17. Les panneaux de substance servent également d'entretoises, évitant tout contact électrique entre les profilés de formage.

Selon le mode de réalisation décrit dans la demande, les panneaux de substance 16 sont mis en forme par les profilés intercalés 17. On comprime l'empilement 15, de manière à ce que les panneaux de substance 16 épousent les formes déterminées par les profilés de formage. Les axes parallèles des secteurs tubulaires adjacents de chacune des formes ainsi empilées déterminent alors une pluralité de plans parallèles superposés, dont on définit le plan médian comme étant le plan général de l'empilement. La forme donnée aux profilés de formage 17 est déterminée par la forme finale que l'on souhaite conférer aux panneaux. Elle peut être différente dans d'autres modes de réalisation de l'invention.

L'empilement 15 ainsi réalisé est alors placé dans le four à micro-ondes 11 destiné à soumettre cet empilement à un rayonnement électromagnétique, ce qui a pour effet, comme connu, de provoquer un échauffement d'une matière non-conductrice, ici la substance 16 que l'on cherche à traiter. On dispose l'empilement 15 de manière à ce que le plan médian de l'empilement soit confondu avec le plan médian parallèle à la paroi de base du four destiné à être le siège d'un rayonnement électromagnétique.

Le rayonnement électromagnétique dans la cavité se constitue de deux champs distincts:

Un premier champ, que l'on appellera "champ direct", est constitué par l'ensemble des ondes émises par la source de rayonnement, selon une loi de directivité déterminée, et n'ayant pas encore heurté un obstacle sur leur trajet de propagation. Ce champ décroit en intensité à mesure que l'on s'éloigne de la source.

Un deuxième champ, sera appelé "champ réfléchi", qui est constitué par l'ensemble des ondes émises par la source dans la cavité et qui ont subi au moins une réflexion lors de leur propagation.

Bien que le champ direct et le champ réfléchi se superposent, on peut déterminer une zone où le champ direct domine, notamment par le fait que l'intensité globale décroît à mesure que l'on s'éloigne de la source, et une zone où le champ réfléchi domine, dans laquelle l'intensité est thériquement répartie de façon homogène dans l'espace, hormis les problèmes particuliers d'ondes stationnaires qui peuvent s'établir et qu'il convient de réduire d'une manière connue en soi.

Recherchant, pour les raisons invoquées ci-dessus à obtenir une répartition de champ aussi homogène que possible, entre les différents panneaux de substance, ce qui implique que le champ soit homogène dans la cavité, il est évident que l'on placera, lors de l'exécution du procédé suivant la présente invention, l'empilement 15 dans la zone de la cavité 11 où le champ réfléchi est dominant. Afin de positionner l'empilement 15 à l'emplacement souhaité pendant l'opération de chauffage, on le place sur un support 14 transparent aux rayonnements électromagnétiques. On génère alors de champ électromagnétique avec une puissance et pendant un temps déterminés afin de réaliser le traitement par échauffement de la substance 16.

L'empilement 15 étant selon l'invention tel que les profilés de formage 17 épousent parfaitement les surfaces des panneaux de substance 16 seules les tranches desdits panneaux de substance 16 mis en forme paraissent découvertes, et sont donc accessibles au rayonnement électromagnétique, qui pénètre alors la substance.

Les profilés de formage 17 étant réfléchissants, ils ne peuvent être traversés par les ondes électromagnétiques. Le champ étant de plus orienté selon la normale à leur surface dans l'espace qui sépare deux profilés superposés, ce champ est donc identique et homogène dans toutes les couches de substance séparant les profilés de formage 17. Ces profilés de formage servent donc dans ce cas de guides d'onde secondaires.

Les irrégularités qui subsistent alors dans la répartition spatiale du champ à l'intérieur de chaque panneau de substance 16 sont dues aux seules ondes stationnaires qui s'établissent en fonction des propres dimensions de ces panneaux de substance. En limitant ces ondes stationnaires à une orientation selon les deux axes qui définissent la surface de contact avec les profilés de formage 17, on établit des ponts thermiques entre les zones les plus chaudes et les zones les plus froides, ce qui a un effet régulateur. Les profilés de formage sont, à cette fin, réalisés en un métal choisi, outre ses propriétés de conduction électrique, pour être un bon conducteur thermique. Un alliage d'aluminium par exemple, peut être avantageusement employé.

L'élimination des ondes stationnaires selon l'un des trois axes est simple et connue en soi: Il suffit de donner une dimension selon cet axe aux pièces à polymériser, ici les panneaux de substance 16, qui soit inférieure à une demi-longueur d'onde du rayonnement se propageant dans la matière.

On a ainsi distribué l'énergie du rayonnement électromagnétique de façon homogène dans tous les panneaux de substance 16, après mise en forme de ceux-ci, et compensé les effets des ondes stationnaires internes à chaque panneau par régulation thermique. On évite ainsi les phénomènes d'accroissement local du champ dus à une élévation de température particulière à une région. On sait que ce phénomène thermiquement divergent, est fondamentalement instable. Il déclenche, comme décrit précédemment, des emballements thermiques produisant une surchauffe locale incontrôlée de la substance, qui devient dès lors, inutilisable. Ce problème est donc résolu dans le procédé selon la présente invention.

L'élévation thermique pouvant être contrôlée pour l'ensemble de la substance, il est donc également possible de reproduire le procédé de façon industrielle, c'est-à-dire identiquement aussi souvent que nécessaire avec une qualité de traitement constante, ce qui est indispensable dans ce cas. De plus, l'échauffement est le même dans toutes les couches. Ceci permet, outre la qualité du matériau traité, un contrôle efficace de la température avec un seul point de mesure.

On peut également utiliser le procédé décrit en juxtaposant plusieurs panneaux de substance 16 et/ou plusieurs pièces métalliques 17 dans un plan horizontal à condition de prendre la précaution de ne pas mettre les pièces métalliques 17 en contact les unes avec les autres.

Il va de soi que la description qui précède n'a été proposée qu'à titre illustratif non limitatif et que de nombreuses variantes peuvent être proposées par l'homme de l'art sans sortir du cadre de l'invention, lequel est défini par les revendications annexées. Les panneaux et les plaques pourraient être plans par exemple, et dans un autre mode de réalisation.

**Revendications**

1. Procédé de chauffage dans la masse d'une substance essentiellement non électriquement conductrice où l'on dispose la substance à l'intérieur d'une cavité (11) fermée à parois électriquement conductrices dans laquelle on injecte, avec une puissance et pendant un temps déterminé, un rayonnement électromagnétique dans la gamme décimétrique qui y crée un champ avec une composante directe et une composante réfléchie caractérisé en ce que l'on répartit la substance à chauffer en couche (16) entre deux plaques (17) d'un métal électriquement bon conducteur, ces deux plaques (17) épousant respectivement chacune des deux plus grandes surfaces de la couche (16) de substance, et en ce que l'on dispose la couche (16) de substance à une distance d'écartement des parois de la cavité (11) au moins égale à un minimum déterminé, où la composante réfléchie devient dominante.

2. Procédé suivant la revendication 1, caractérisé en ce que l'épaisseur de la substance est inférieure à 1/2 longueur d'onde du rayonnement se propageant dans la substance.

3. Procédé suivant l'une quelconque des revendications 1 et 2, caractérisé en ce que l'on répartit la substance à chauffer en panneaux (16) étendus généralement suivant un plan et présentant une épaisseur déterminée, on constitue un empilement (15) de ces panneaux (16) avec interposition de plaques (17) en un métal électriquement bon conducteur qui épousent la forme desdits panneaux, deux plaques étant en outre disposées respectivement au sommet et à la base de l'empilement, et l'on dispose ledit empilement à une distance d'écartement minimum déterminée des parois de ladite cavité (11).

4. Procédé suivant la revendication 3, caractérisé en ce que les plaques (17) qui séparent les panneaux (16) de substance destinée à être chauffée sont bons conducteurs thermiques.

5. Procédé suivant la revendication 3, caractérisé en ce que les plaques (17) qui séparent les panneaux (16) de substance destinée à être chauffée sont des profilés de formage qui déterminent la forme desdits panneaux de substance par compression de l'empilement suivant une direction normale aux plans généraux des panneaux.

6. Procédé suivant l'une quelconque des revendications précédentes, caractérisé en ce qu'il met en oeuvre de la substance destinée à être chauffée selon une forme généralement rectangulaire en projection plane, constituée par accolement d'au moins deux ou plusieurs secteurs tubulaires suivant une génératrice.

7. Procédé suivant la revendication 1, caractérisé en ce que la cavité est de dimensions telles que l'empilement ne s'approche nulle part des parois de moins de trois demilongueurs d'onde.

8. Procédé suivant l'une quelconque des revendications précédentes, caractérisé en ce qu'il met en oeuvre un four à micro-ondes.

**Patentansprüche**

1. Verfahren zum internen Erhitzen einer im wesentlichen elektrisch nicht leitfähigen Substanz, wobei die Substanz in das Innere eines geschlossenen Hohlraums (11) mit elektrisch leitfähigen Wänden eingebracht wird, in den man mit festgelegter Leistung und während eines festgelegten Zeitraums eine elektromagnetische Strahlung im Dezimeterbereich einleitet, die darin ein Feld mit einer Mitfeldkomponente und einer reflektierten Komponente erzeugt, dadurch gekennzeichnet, daß man die zu erhitzende Substanz in einer Schicht (16) zwischen zwei Platten (17) aus einem elektrisch gut leitfähigen Metall verteilt, wobei diese beiden Platten (17) jeweils mit den beiden größten Flächen der Substanzschicht (16) in Kontakt sind, und daß man die Substanzschicht (16) in einem Abstand von den Wänden des Hohlraums (11) anordnet, der wenigstens einem bestimmten Mindestwert entspricht, wobei die reflektierte Komponente dominant wird.

2. Verfahren nach Anspruch 1, dadurch gekennzeichnet, daß die Dicke der Substanz weniger als die Hälfte der Wellenlänge der sich in der Substanz ausbreitenden Strahlung beträgt.

3. Verfahren nach einem der Ansprüche 1 und 2, dadurch gekennzeichnet, daß man die zu erhitzende Substanz in Tafeln (16) aufteilt, die im allgemeinen in einer Ebene liegen und eine feststehende Dicke aufweisen, und daß man einen Stapel (15) dieser Tafeln (16) unter Einfügung von Platten (17) aus einem elektrisch gut leitenden Metall bildet, welche der Form der genannten Tafeln angepaßt sind, wobei zwei Platten außerdem jeweils am Scheitelpunkt bzw. am Fuß des Stapels angeordnet sind, und daß man den genannten Stapel in einem bestimmten Mindestabstand von den Wänden des geannten Hohlraums (11) anordnet.

4. Verfahren nach Anspruch 3, dadurch gekennzeichnet, daß die Platten (17), welche die zu erhitzenden Substanztafeln (16) voneinander trennen, eine gute Wärmeleitfähigkeit aufweisen.

5. Verfahren nach Anspruch 3, dadurch gekennzeichnet, daß die Platten (17), welche die zu erhitzenden Substanztafeln (16) voneinander trennen, Formprofile sind, welche die Form der genannten Substanztafeln durch Zusammendrücken des Stapels in einer Richtung bestimmen, die senkrecht zu den Hauptbenen der Tafeln verläuft.

6. Verfahren nach einem der vorherigen Ansprüche, dadurch gekennzeichnet, daß dabei eine zu erhitzende Substanz entsprechend einer Form mit allgemein rechtwinkligem Grundriß verwendet wird, die man durch Anordnung von wenigstens zwei oder mehr rohrförmigen Sektoren entsprechend einer Erzeugenden bewirkt.

7. Verfahren nach Anspruch 1, dadurch gekennzeichnet, daß der Hohlraum so bemessen ist, daß sich der Stapel an keiner Stelle weniger als drei Wellenhalblängen an die Wände annähert.

8. Verfahren nach einem der vorherigen Ansprüche, dadurch gekennzeichnet, daß dabei ein Mikrowellenofen verwendet wird.

## Claims

1. A method of internally heating an electrically substantially non-conducting substance, wherein the substance is disposed inside a cavity (11) which is closed by electrically conductive walls and into which there is injected electromagnetic radiation in the decimetric waveband, at a predetermined power level and for a predetermined time, so as to create in the cavity a field having a direct component and a reflected component, characterised in that the substance to be heated is disposed as a layer (16) between two plates (17) of a metal that is a good electrical conductor, with the two said plates (17) respectively hugging each of the two largest surfaces of the layer (16) of the said substance, and in that the layer (16) of the said substance is disposed so as to be spaced at a distance from the walls of the cavity (11) which is at least equal to a predetermined minimum at which the reflective component becomes dominant.

2. A method according to Claim 1, characterised in that the thickness of the said substance is less than one half of a wavelength of the radiation propagating in the substance.

3. A method according to either one of Claims 1 and 2, characterised in that panels (16), comprising the substance to be heated extending generally in a plane and having a predetermined thickness, are laid out, a stack (15) of the said panels (16) is formed with the interposition between them of plates (17) of a metal that is a good electrical conductor, which hug the profile of the said panels, two plates being disposed in addition, respectively at the top and at the bottom of the stack, and the said stack is placed at a predetermined minimum distance away from the walls of the said cavity (11).

4. A method according to Claim 3, characterised in that the plates (17) which separate the panels (16) of the substance which is to be heated are good thermal conductors.

5. A method according to Claim 3, characterised in that the plates (17) which separate the panels (16) of the said substance which is to be heated are forming dies which form the profile of the said panels of the substance by compression of the stack in a direction normal to the general planes of the panels.

6. A method according to any one of the preceding Claims, characterised in that it employs the substance which is to be heated in a shape which is generally rectangular in flat projection, constituted by joining at least two or more tubular sectors joined together on a generatrix.

7. A method according to Claim 1, characterised in that the cavity is of such dimensions that the stack is no closer to any part of the walls than three half wavelengths.

8. A method according to any one of the preceding Claims, characterised in that it employs a microwave oven.

EP  0 178 217  B1

FIG.1

FIG.2

FIG.3

1